# EUROPÄISCHE PATENTSCHRIFT

(11) **EP 0 991 544 B1**
(45) Veröffentlichungstag und Bekanntmachung des Hinweises auf die Patenterteilung: **04.09.2002**
(21) Anmeldenummer: 98966857.9
(22) Anmeldetag: 30.12.1998
(51) Int. Cl.: B60N 2/44

(54) **KRAFTFAHRZEUGSITZ**
MOTOR VEHICLE SEAT
SIEGE DE VEHICULE AUTOMOBILE

(30) Priorität: 20.04.1998 DE 19817503
(43) Veröffentlichungstag der Anmeldung: 12.04.2000
(73) Patentinhaber: Faurecia Autositze GmbH & Co. KG, 31655 Stadthagen (DE)
(72) Erfinder: BROCKMANN, Jörg, D-31655 Stadthagen (DE); MÖNNICH, Thomas, D-31683 Obernkirchen (DE); PERNER, Ralf, D-06385 Aken (DE); SCHNEIDER, Thomas, D-31675 Bückeburg (DE); VOLMAR, Katrin, D-31867 Lauenau (DE)
(74) Vertreter: Patentanwälte Dipl.-Ing. Bodo Thielking Dipl.-Ing. Otto Elbertzhagen
(86) Internationale Anmeldenummer: EP9808504
(87) Internationale Veröffentlichungsnummer: WO99054162

(56) Entgegenhaltungen:
- DE-A- 4 209 391
- DE-A- 4 213 917
- DE-A- 19 603 946
- GB-A- 2 246 699
- US-A- 4 192 545
- US-A- 5 501 509

## Beschreibung

### TECHNISCHES GEBIET

Die Erfindung betrifft einen Kraftfahrzeugsitz mit einem Sitzgestell, wie im Oberbegriff von Patentanspruch 1 angegeben.

### STAND DER TECHNIK

Bekannte Kraftfahrzeugsitze, siehe z.B. US-A-4 192 545, werden in ihrer Festigkeit nach den Prüfbedingungen der Automobilindustrie für einen Dummy ausgelegt, der für 95% der tatsächlichen Benutzer repräsentativ sein soll. Die Auslegung erfolgt dabei für ggf. mehrere Fahr- bzw. Unfallsituationen. Bei von den Auslegungsbedingungen abweichenden Verhältnissen kann der Sitz beispielsweise zu steif ausgelegt sein, mit der Folge, daß der Benutzer bei einem Crash zu starken Beschleunigungen ausgesetzt ist. Wenn hingegen der Kraftfahrzeugsitz bei von den Auslegungsbedingungen abweichenden Verhältnissen zu weich ausgelegt ist, erhöht sich die Verletzungsgefahr für den Benutzer durch unzureichende Haltekräfte der Sitzkonstruktion.

### DIE ERFINDUNG

Ausgehend von dem Stand der Technik liegt der Erfindung die Aufgabe zugrunde, die Festigkeit oder Steifigkeit von Sitzstrukturen bei dem fertigen Sitz zu verändern.

Die Lösung dieser Aufgabe erfolgt durch die Merkmale des Patentanspruchs 1.

Bevorzugte Ausgestaltungen der Erfindung ergeben sich aus den Unteransprüchen.

Bei dem vorgeschlagenen Kraftfahrzeugsitz wird die Sitzstruktur oder ein Teil davon in seiner Festigkeit dem Insassen individuell angepaßt. Vorherrschende Fahrbedingungen können ebenfalls berücksichtigt werden.

### KURZBESCHREIBUNG DER ZEICHNUNGSABBILDUNG

Nachstehend werden mehrere Ausführungsformen der Erfindung anhand der Zeichnungen näher beschrieben. In den Zeichnungen sind gleiche Teile mit den gleichen Bezugszeichen versehen, die sich im Bedarfsfall durch Hochstriche voneinander unterscheiden. Es zeigen:
- Figur 1 -: die Seitenansicht eines schematisch dargestellten Kraftfahrzeugsitzes mit einem plattenförmigem Verstärkungs- oder Versteifungselement der Rückenlehne bei weicherer Einstellung der Rükkenlehnenstruktur;
- Figur 2 -: den Kraftfahrzeugsitz gemäß Fig. 1 in steiferer Einstellung;
- Figur 3 -: die Seitenansicht einer alternativen Ausführungsform mit einem Zugkraft ausübenden Verstärkungs- oder Versteifungselement, das an einem Ende eine Klinkenbefestigung aufweist, in steiferer Einstellung der Rückenlehnenstruktur;
- Figur 4 -: den Kraftfahrzeugsitz gemäß Fig. 3 in weicherer Einstellung;
- Figur 5 -: eine im wesentlichen Fig. 3 entsprechende Ausführungsform des Kraftfahrzeugsitzes mit einer Bolzenverriegelung des Zugkraft ausübenden Verstärkungselements in steiferer Einstellung der Rückenelehnenstruktur;
- Figur 6 -: den Kraftfahrzeugsitz gemäß Fig. 5 in weicherer Einstellung.

### BESTER WEG ZUR AUSFÜHRUNG DER ERFINDUNG

Bei allen Ausführungsformen weist der Kraftfahrzeugsitz ein Grundgestell 1 auf, das aus einem Rückenlehnengestell 1a und einem Sitzgestell 1e besteht. Die unterschiedlichen Ausführungsformen unterscheiden sich durch die Art und Befestigung von am Rückenlehnengestell 1a befestigbaren Verstärkungs- oder Versteifungselementen:

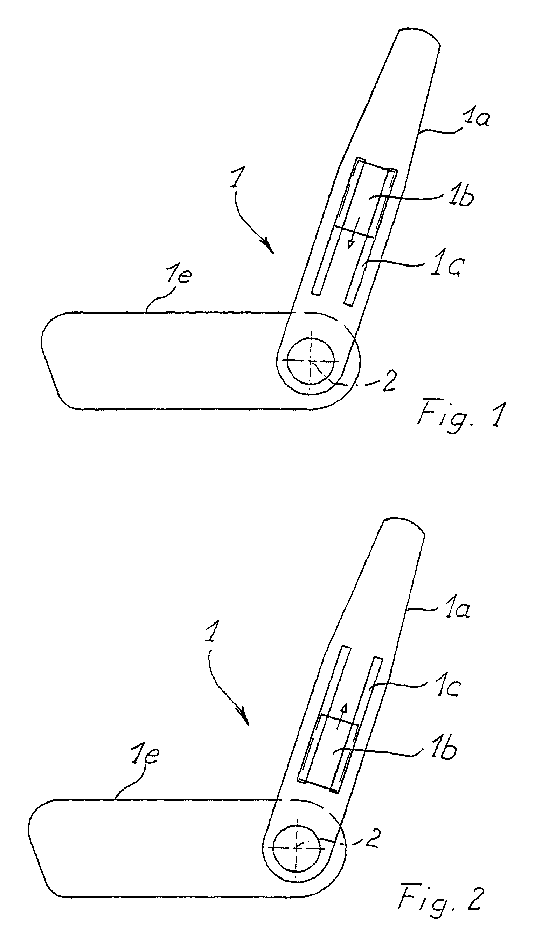

Bei der Ausführungsform gemäß Figuren 1 und 2 ist ein plattenförmiges Verstärkungs- oder Versteifungselement 1b vorgesehen, das sich in seinem Abstand von der Neigungsachse 2 verstellen läßt. Das plattenförmige Verstärkungs- oder Versteifungselement 1b wird zwischen zueinander parallelen Führungsschienen 1c verschoben, die fest mit dem Rückenlehnengestell 1a verbunden oder damit einteilig ausgebildet sind.

In Figur 1 ist das plattenförmige Verstärkungs- oder Versteifungselement 1b nach oben so verschoben, daß es den größten Abstand von der Neigungsachse 2 einhält. In dieser nach oben verschobenen Lage des Verstärkungs- oder Versteifungselements 1b wird die Steifigkeit des Rückenlehnengestells 1a im zur Neigungsachse 2 benachbarten Bereich geringer sein als bei der nach unten verschobenen Anordnung gemäß Figur 2. Bei der in Figur 2 dargestellten Position des Verstärkungs- oder Versteifungselements 1b besitzt das Rückenlehnengestell 1a benachbart zur Neigungsachse 2 eine erhöhte Festigkeit und Steifigkeit der Rückenlehnenstruktur.

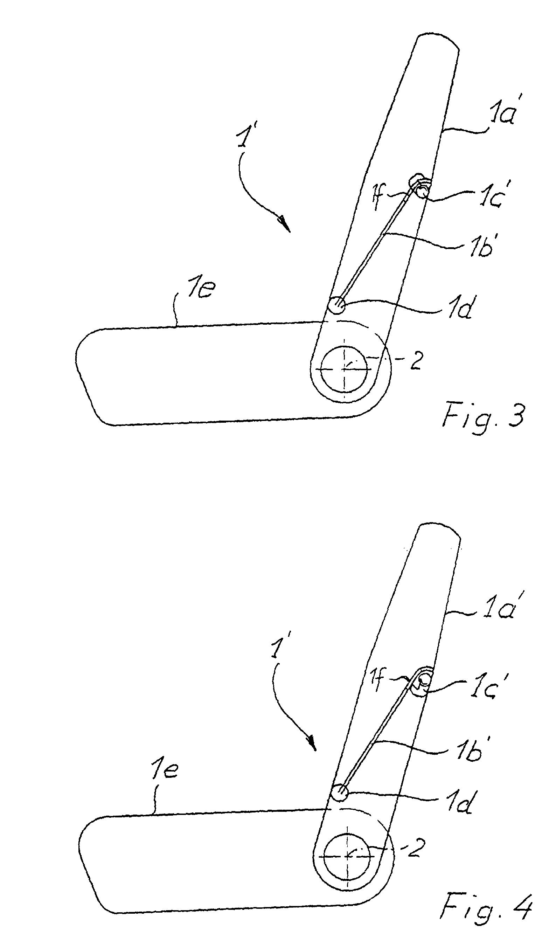

Bei der in Figuren 3 und 4 dargestellten Ausführungsform ist das Verstärkungs- oder Versteifungselement 1b' als Zugstange oder Zugband ausgebildet.

Das Verstärkungs- oder Versteifungselement 1b' ist an seinem unteren Ende über ein nicht näher dargestelltes Befestigungselement 1d am Rückenlehnengestell 1a' befestigt. Am oberen Ende des als Zugstange ausgebildeten Verstärkungsoder Versteifungselements 1b' ist ein als Klinke ausgebildetes Spannelement 1c' vorgesehen, das entweder eine Ausnehmung 1f durchsetzt und das als Zugstange oder Zugband ausgebildete Verstärkungs- oder Versteifungselement 1b' spannt oder aus der Ausnehmung 1f herausgeschwenkt ist und deshalb des obere Ende des Verstärkungs- oder Versteifungselements 1b' nicht fest mit dem Rückenlehnengestell 1a' verbindet.

Im Spannzustand gemäß Figur 3 besitzt die Struktur des Rükkenlehnengestells 1a' eine höhere Steifigkeit als im ungespannten Zustand gemäß Figur 4.

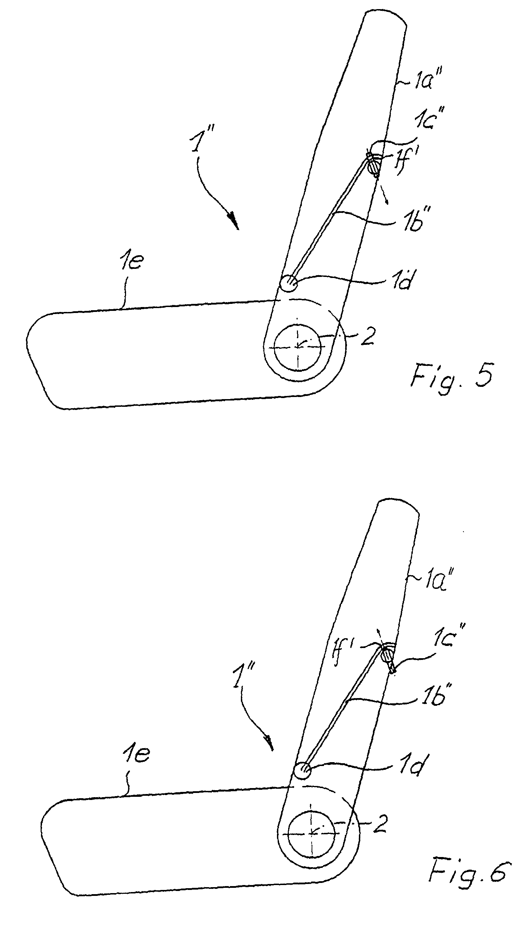

Bei der Ausführungsform gemäß Figuren 5 und 6 ist wiederum das Verstärkungs- oder Versteifungselement 1b" als Zugband oder Zugstange ausgebildet. Die Befestigung am unteren Ende entspricht derjenigen von Figuren 3 und 4. Die feste Verbindung des oberen Endes des Verstärkungs- oder Versteifungselements 1b" erfolgt bei dieser Lösung mittels eines Bolzens 1c", der in Spannlage eine Ausnehmung 1f' quer durchsetzt und in nicht gespannter Lage aus der Ausnehmung 1f' zurückgezogen ist. In der Spannlage gemäß Figur 5 besitzt die Struktur des Rückenlehnengestells 1a" eine größere Steifigkeit und Festigkeit als in der ungespannten Stellung gemäß Figur 6.

Die Verstellung der Verstärkungs- oder Versteifungselemente kann sowohl nach Kennwerten des Benutzers, wie beispielsweise Größenangaben, Gewicht, Muskelausbildung, etc. erfolgen, als auch nach Kennwerten des Fahrzustandes, beispielsweise in Abhängigkeit von der Fahrgeschwindigkeit.

Die Kennwerte des Benutzers können beispielsweise auf einem Datenträger gespeichert sein, mit dem die Verstellantriebe für die Verstärkungs- oder Versteifungselemente so gesteuert werden, daß die jeweils günstigste Position erreicht wird. Es ist auch möglich, die Kennwerte des Benutzers sensorisch zu erfassen und die so erfaßten Kennwerte zur Verstellung auszunutzen.

Auch Kennwerte des Fahrzustandes, beispielsweise bestimmte Beschleunigungszustände, können sensorisch bestimmt und verwendet werden. Die Fahrgeschwindigkeit läßt sich ohne weiteres von der Geschwindigkeitsanzeige abnehmen.

## Patentansprüche

1. Kraftfahrzeugsitz mit einem Sitzgestell,
das aus einem Grundgestell (1; 1'; 1") und Verstärkungs- oder Versteifungselementen (1b; 1b'; 1b") besteht, **dadurch gekennzeichnet, daß** die Verstärkungs- oder Versteifungselemente (1b; 1b'; 1b") in ihrer Lage gegenüber dem Grundgestell (1; 1'; 1") zur Veränderung der Festigkeitseigenschaften des Gestells verstellbar sind.

2. Kraftfahrzeugsitz nach Anspruch 1,
**dadurch gekennzeichnet,**
**daß** die Verstärkungs- oder Versteifungselemente (1b; 1b'; 1b") nach Kennwerten des Benutzers verstellbar sind.

3. Kraftfahrzeugsitz nach Anpruch 1 oder 2,
**dadurch gekennzeichnet,**
**daß** die Verstärkungs- oder Versteifungselemente (1b; 1b'; 1b") von dem Grundgestell (1; 1' 1") gehaltert sind.

4. Kraftfahrzeugsitz nach Anspruch 1,
**dadurch gekennzeichnet,**
**daß** die Verstärkungs- oder Versteifungselemente (lb) am Grundgestell (1) verschieblich geführte Plattenelemente sind.

5. Kraftfahrzeugsitz nach einem oder mehreren der Ansprüche 1 bis 3,
**dadurch gekennzeichnet,**
**daß** die Verstärkungs- oder Versteifungselemente (1b'; 1b") Zugelemente sind.

6. Kraftfahrzeugsitz nach Anspruch 5,
**dadurch gekennzeichnet,**
**daß** die Zugelemente zwischen zwei Befestigungsstellen des Grundgestells (1'; 1") spannbare Zugstangen oder Zugbänder (1b'; 1b") sind.

7. Kraftfahrzeugsitz nach Anspruch 6,
**dadurch gekennzeichnet,**
**daß** die Zugstangen oder Zugbänder (1b'; 1b") mittels am Grundgestell (1'; 1") vorgesehener Spannelemente spannbar sind.

8. Kraftfahrzeugsitz nach Anspruch 5,
**dadurch gekennzeichnet,**
**daß** die Zugkraft der Zugstangen oder Zugbänder (1b'; 1b") einstellbar ist.

9. Kraftfahrzeugsitz nach einem oder mehreren der Ansprüche 1 bis 8,
**dadurch gekennzeichnet,**
**daß** die Verstellung der Verstärkungs- oder Versteifungselemente (1b; 1b'; 1b") in Abhängigkeit von der Gewichtsbelastung des Kraftfahrzeugsitzes wählbar ist.

10. Kraftfahrzeugsitz nach Anspruch 9,
**dadurch gekennzeichnet,**
**daß** die Lage der Verstärkungs- oder Versteifungselemente (1b; 1b'; 1b") motorisch verstellbar ist.

11. Kraftfahrzeugsitz nach einem oder mehreren der Ansprüche 1 bis 10,
**dadurch gekennzeichnet,**
**daß** die Verstärkungs- oder Versteifungselemente (1b; 1b'; 1b") nach Kennwerten des Fahrzustandes verstellbar sind.

12. Kraftfahrzeugsitz nach einem oder mehreren der Ansprüche 1 bis 11,
**dadurch gekennzeichnet,**
**daß** die Kennwerte des Benutzers auf einem Datenträger gespeichert sind, der die Verstellung der Verstärkungsoder Versteifungselemente (1b; 1b'; 1b") steuert.

13. Kraftfahrzeugsitz nach einem oder mehreren der Ansprüche 1 bis 11,
**dadurch gekennzeichnet,**
**daß** die Kennwerte des Benutzers sensorisch erfaßt und zur Verstellung der Verstärkungs- oder Versteifungselemente (1b; 1b'; 1b") verwendet werden.

14. Kraftfahrzeugsitz nach einem oder mehreren der Ansprüche 1 bis 13,
**dadurch gekennzeichnet,**
**daß** die Kennwerte des Fahrzustandes gemessen und zur Verstellung der Verstärkungs- oder Versteifungselemente (1b; 1b'; 1b") verwendet werden.

## Claims

1. Motor vehicle seat having a seat frame which consists of a base frame (1; 1', 1'') and reinforcement or strengthening elements (1b; 1b'; 1b'') **characterised in that** the reinforcement or strengthening elements (1b; 1b'; 1b'') can be adjusted in their position relative to the base frame (1; 1'; 1'') in order to change the strength properties of the frame.

2. Motor vehicle seat according to claim 1 **characterised in that** the reinforcement or strengthening elements (1b; 1b'; 1b'') can be adjusted according to the characteristic values of the user.

3. Motor vehicle seat according to claim 1 or 2 **characterised in that** the reinforcement or strengthening elements (1b; 1b'; 1b'') are held by the base frame (1'; 1', 1'').

4. Motor vehicle seat according to claim 1 **characterised in that** the reinforcement or strengthening elements (1b) are plate elements guided displaceable on the base frame (1).

5. Motor vehicle seat according to one or more of claims 1 to 3 **characterised in that** the reinforcement or strengthening elements (1b'; 1b'') are tension elements.

6. Motor vehicle seat according to claim 5 **characterised in that** the tension elements are tension rods or tensile strips (1b'; 1b'') which can be tensioned between two fixing points of the base frame (1'; 1'').

7. Motor vehicle seat according to claim 6 **characterised in that** the tension rods or tensile strips (1b'; 1b'') can be tensioned by means of tension elements provided on the base frame (1'; 1'').

8. Motor vehicle seat according to claim 5 **characterised in that** the tension force of the tension rods or tensile strips (1b'; 1b'') can be adjusted.

9. Motor vehicle seat according to one or more of claims 1 to 8 **characterised in that** the adjustment of the reinforcement or strengthening elements (1b; 1b'; 1b'') can be selected in dependence on the weight load on the vehicle seat.

10. Motor vehicle seat according to claim 9 **characterised in that** the position of the reinforcement or strengthening elements (1b 1b'; 1b'') can be adjusted by motor.

11. Motor vehicle seat according to one or more of claims 1 to 10 **characterised in that** the reinforcement or strengthening elements (1b; 1b'; 1b'') can be adjusted according to the characteristic values of the driving conditions.

12. Motor vehicle seat according to one or more of claims 1 to 11 **characterised in that** the characteristics of the user are stored on a data carrier which controls the adjustment of the reinforcement or strengthening elements (1b; 1b'; 1b'').

13. Motor vehicle seat according to one or more of claims 1 to 11 **characterised in that** the characteristics of the user are determined by sensors and are used to adjust the reinforcement or strengthening elements (1b; 1b'; 1b'').

14. Motor vehicle seat according to one or more of claims 1 to 13 **characterised in that** the characteristic values of the driving conditions are measured and used to adjust the reinforcement or strengthening elements (1b; 1b'; 1b'').

## Revendications

1. Siège de véhicule automobile comprenant un bâti qui est composé d'un châssis de base (1; 1'; 1'') et d'éléments de renforcement ou de raidissement (1b; 1b', 1b''),
**caractérisé en ce que**
la position desdits éléments de renforcement ou de raidissement (1b; 1b', 1b'') peut être réglée par rapport au châssis de base (1; 1'; 1'') dans le but de modifier les propriétés dudit châssis.

2. Siège de véhicule automobile selon la revendication 1,
**caractérisé en ce que**
les éléments de renforcement ou de raidissement (1b; 1b', 1b'') sont réglables en fonction des données caractéristiques de l'utilisateur.

3. Siège de véhicule automobile selon la revendication 1 ou 2,
**caractérisé en ce que**
les éléments de renforcement ou de raidissement (1b; 1b', 1b'') sont portés par le châssis de base (1; 1'; 1'').

4. Siège de véhicule automobile selon la revendication 1,
**caractérisé en ce que**
les éléments de renforcement ou de raidissement (1b) sont des éléments en forme de plaque qui glissent sur le châssis de base (1).

5. Siège de véhicule automobile selon l'une des revendications 1 à 3,
**caractérisé en ce que**
les éléments de renforcement ou de raidissement (1b', 1b'') sont des éléments de traction.

6. Siège de véhicule automobile selon la revendication 5,
**caractérisé en ce que**
les éléments de traction (1b', 1b'') sont des barres
ou des bandes de traction, qui sont disposées entre deux points de fixation du châssis de base (1'; 1'') et peuvent être tendues.

7. Siège de véhicule automobile selon la revendication 6
**caractérisé en ce que**
les barres ou les bandes de traction 1b'; 1b'') peuvent être tendues à l'aide de tendeurs, qui équipent le châssis de base (1'; 1'').

8. Siège de véhicule automobile selon la revendication 5,
**caractérisé en ce que**
la force de traction des barres ou des bandes de traction (1b'; 1b'') est réglable.

9. Siège de véhicule automobile selon l'une ou plusieurs des revendications 1 à 8,
**caractérisé en ce que**
le réglage des éléments de renforcement ou de raidissement (1b; 1b', 1b'') peut être sélectionné en fonction de la charge exercée sur le siège par l'occupant en raison du poids de celui-ci.

10. Siège de véhicule automobile selon la revendication 9,
**caractérisé en ce que**
la position des éléments de renforcement ou de raidissement (1b; 1b', 1b'') peut être réglée à l'aide d'un moteur.

11. Siège de véhicule automobile selon l'une ou plusieurs des revendications 1 à 10,
**caractérisé en ce que**
les éléments de renforcement ou de raidissement (1b; 1b', 1b'') sont réglables en fonction des données caractéristiques de l'utilisateur.

12. Siège de véhicule automobile selon l'une ou plusieurs des revendications 1 à 11,
**caractérisé en ce que**
les données caractéristiques de l'utilisateur sont mémorisées sur un support de données qui commande le réglage des éléments de renforcement ou de raidissement (1b; 1b', 1b'').

13. Siège de véhicule automobile selon l'une ou plusieurs des revendications 1 à 11,
**caractérisé en ce que**
les données caractéristiques de l'utilisateur sont saisies sensoriellement et exploitées aux fins de réglage des éléments de renforcement ou de raidissement (1b; 1b', 1b'').

14. Siège de véhicule automobile selon l'une ou plusieurs des revendications 1 à 13,
**caractérisé en ce que**
les données caractéristiques de la situation et de l'état, dans lesquels roule le véhicule automobile, sont mesurées et exploitées pour régler les éléments de renforcement ou de raidissement (1b; 1b', 1b'').
